# EUROPÄISCHE PATENTSCHRIFT

(11) **EP 0 842 824 B1**
(45) Veröffentlichungstag und Bekanntmachung des Hinweises auf die Patenterteilung: **19.04.2000**
(21) Anmeldenummer: 97119409.7
(22) Anmeldetag: 06.11.1997
(51) Int. Cl.: B60R 21/00

(54) **Steuerverfahren für ein Sicherheitssystem in Kraftfahrzeugen**
Control method for a safety system in a motor vehicle
Procédé de contrôle d'un système de sécurité dans un véhicule à moteur

(30) Priorität: 11.11.1996 DE 19646387
(43) Veröffentlichungstag der Anmeldung: 20.05.1998
(73) Patentinhaber: TEMIC TELEFUNKEN microelectronic GmbH, 90411 Nürnberg (DE)
(72) Erfinder: Fendt, Günter, 86529 Schrobenhausen (DE); Hora, Peter, 86529 Schrobenhausen (DE); Hussmann, Robert, 86399 Bobingen (DE)
(74) Vertreter: Maute, Hans-Jürgen, Dipl.-Ing.

(56) Entgegenhaltungen:
- EP-A- 0 783 153
- DE-A- 3 624 456
- DE-A- 4 207 785
- FR-A- 2 732 286
- US-A- 5 521 588

## Beschreibung

Die Erfindung betrifft ein Steuerverfahren zur Auslösung von adressierbaren Modulen eines Sicherheitssystems in Kraftfahrzeugen, die mit der Zentraleinheit verbunden sind.

Bei derartigen Systemen, bei denen eine Vielzahl von Modulen von einer Zentraleinheit gesteuert werden und im Bedarfsfall einzeln, gruppenweise oder gemeinsam sehr schnell aktiviert werden müssen, ist es erforderlich, die Steuerinformation zum Aktivieren der einzelnen Module von der Zentraleinheit nicht nur zuverlässig sondern auch schnell zu den Modulen zu übertragen.

Die DE 36 24 456 A1 sowie die DE 43 15 494 C1 beschreiben die Initialisierung elektronischer Systeme von Kraftfahrzeugen, also die Inbetriebnahme oder zyklische Reaktivierung eines Systems, bei der in den einzelnen dezentralen Steuergeräten für alle möglichen Betriebszustände entsprechende Programme und Festwerte abgelegt sind. Die DE 36 24 456 lehrt die globale Zuweisung des aktuellen Betriebszustandes an die dezentralen Steuergeräte, die daraufhin die geeigneten Programme und Festwerte laden, währenddessen die DE 43 15 494 die Initialisierung nachträglich eingebauter Module betrachtet.

Bei Sicherheitssystemen in Kraftfahrzeugen, bei denen eine Vielzahl von insassenschützenden Einrichtungen, wie Front-Airbags, Seiten-Airbags, Gurtstraffer, Überrollschutz und dergleichen, von einem zentralen Steuergerät angesteuert und ausgelöst werden, weist das zentrale Steuergerät neben der Zentraleinheit eine der Anzahl der personenschützenden Mittel entsprechende Anzahl von Endstufen auf, die jeweils einen Zündkreis für die zugeordnete insassenschützende Einrichtung umfassen. Um bei der hohen Anzahl der Endstufen - in Zukunft ist mit 20 und mehr Endstufen entsprechend der steigenden Zahl von immer mehr insassenschützenden Einrichtungen zu rechnen - diese sehr schnell ansprechen zu können, ist es erforderlich, daß die Schnittstelle zwischen der Zentraleinheit, beispielsweise einem Mikroprozessor, und den Endstufen, die beispielsweise zu Gruppen zusammengefaßt auf anwendungsspezifischen integrierten Schaltungen (ASIC) vorgesehen sind, sehr schnell funktioniert. Dies läßt sich dadurch erreichen, daß die Schnittstelle zu den ASIC's direkt parallel mit dem µP-Bus des Mikroprozessors verbunden wird.

Diese sehr schnell funktionierende Schnittstelle ist jedoch anfällig gegen kurze Störimpulse und Substratströme. Daneben wird die Gesamtverlustleistung im System erhöht, da die Treiberausgänge wegen der hohen Schnittstellenfrequenz mehr Strom benötigen. Dies ist insbesondere bei einem gefährlichen Aufprall, also wenn die insassenschützenden Einrichtungen ausgelöst werden müssen, von Nachteil, da das Sicherheitssystem dann ggf. autark arbeiten muß, und nur noch von im System vorgesehenen Autarkiekondensatoren mit Strom versorgt wird.

Ein weiterer Nachteil besteht darin, daß die Schnittstelle infolge der hohen Schnittstellenfrequenz während der ständigen Überprüfungen, die beispielsweise alle 0,5 s zyklisch wiederholt werden, Störungen aussendet (EMV-Störaussendung), die andere elektronische Einrichtungen des Fahrzeugs stören und den Rundfunkempfang beeinträchtigen können.

Eine solche Insassenschutzeinrichtung ist beispielsweise der DE 42 07 785 A1 zu entnehmen, bei der Aufprallsignale der Sensoren zunächst von der Zentraleinheit ausgewertet und nachfolgend entsprechende Auslösesignale an die einzelnen Module gesandt werden.

Bei Sicherheitssystemen, die als dezentrales System realisiert sind, bei denen also die Endstufen zur Auslösung der insassenschützenden Einrichtungen als periphere Module angeordnet sind, machen sich die oben beschriebenen Nachteile noch stärker bemerkbar. Außerdem führt die parallele Verbindung der Schnittstellen mit dem µP-Bus des Mikroprozessors zu einer derartig aufwendigen Verkabelung im Fahrzeug, die praktisch nicht mehr mit einem vertretbaren Aufwand zu realisieren ist.

Davon ausgehend liegt der Erfindung die Aufgabe zugrunde, ein weiteres steuerverfahren der eingangs genannten Art bereitstellen, das insbesondere eine schnelle und zuverlässige Ansteuerung einer Vielzahl von Modulen auf einfache und energiesparende Weise ermöglicht.

Diese Aufgabe wird durch das Steuerverfahren nach Anspruch 1 gelöst.

Erfindungsgemäß wird also zum Aktivieren von Modulen eine Steuerinformation von der Zentraleinheit an alle Module übertragen, die in jedem einzelnen Modul mit einer dort gespeichert Aktivierungsinformation verglichen oder in Beziehung gesetzt wird. Steht die übertragene Steuerinformation in einer vorgegebenen Beziehung zu der gespeicherten Aktivierungsinformation, so wird das entsprechende Modul aktiviert. Es werden also nur diejenigen der angesprochenen Module aktiviert, in denen die Steuerinformation mit Aktivierungsinformation des Moduls in der vorgegebenen Beziehung steht.

Auf diese Weise kann eine sehr schnelle Aktivierung von ausgewählten Modulen erfolgen, selbst wenn die Steuerinformation seriell zu den Modulen übertragen wird, da die Übertragung zu allen Modulen gleichzeitig erfolgt. Ein weiterer wesentlicher Vorteil der Erfindung besteht darin, daß die Zentraleinheit nicht berechnen muß, welche der Module in der gegebenen Situation zu aktivieren sind, sondern nur eine die Situation bezeichnende Steuerinformation an die Module zu übertragen braucht, die dann aufgrund der in ihnen gespeicherten Aktivierungsinformation die Aktivierungsentscheidung selber treffen. Hierdurch wird Rechenkapazität in der Zentraleinheit eingespart, bzw. vorhandene Rechenkapazität kann anderweitig genutzt werden. Damit läßt sich beispielsweise auch die Verlustleistung der Zentraleinheit reduzieren.

Die serielle Datenübertragung zwischen der Zentraleinheit und den Modulen hat ferner den Vorteil, daß der schaltungstechnische Aufbau des System vereinfacht werden kann, da für die serielle Datenübertragung weniger Treiberausgänge der Zentraleinheit erforderlich sind. Außerdem kann die Schnittstellenfrequenz verringert werden, da je nach Auslegung der Aktivierungsinformation die erforderliche Steuerinformation mit nur einem oder wenigen Schreibvorgängen an alle Module gleichzeitig übertragen werden kann. Dies führt zu einer geringeren EMV-Störausstrahlung, was insbesondere im Kfz-Bereich von Vorteil ist, da dort immer häufiger Kunststoffgehäuse zu Gewichtseinsparung eingesetzt werden.

Umgekehrt ist aber auch die Störanfälligkeit einer seriellen Schnittstelle mit relativ niedriger Schnittstellenfrequenz geringer als die einer schnellen parallelen Schnittstelle, so daß sich auch die Zuverlässigkeit des Systems erhöht.

Da das erfindungsgemäße Verfahren eine serielle Datenübertragung von der Zentraleinheit zu den Modulen ermöglich, läßt sich insbesondere bei einem zentralen System, bei dem die Zentraleinheit und die Module auf einer Leiterplatte angeordnet sind, die Verbindungsleitungen zwischen den Modulen und der Zentraleinheit verringern, so daß sich insbesondere das Layout der Leiterplatte mit geringerem Aufwand einfacher gestalten läßt.

Besonders vorteilhaft ist es, wenn die in den Modulen gespeicherte Aktivierungsinformation einstell- oder programmierbar ist. Werden die einzelnen Module von der Zentraleinheit zyklisch überprüft, so wird die in den Modulen gespeicherte Aktivierungsinformation insbesondere während der zyklischen Überprüfungen eingestellt.

Als Aktivierungsinformation kann je nach der Komplexität des Systems, also je nach Art und Anzahl der Module ein einzelner Schwellenwert oder eine Kombination von zwei oder mehr Schwellenwerten vorgesehen sein.

Während es bei einem zentralen System, also bei einem System, bei dem die Zentraleinheit und die Module beispielsweise auf einer Leiterplatte angeordnet sind, zweckmäßig ist, die Module über Auswahlleitungen zu adressieren, ist es bei einem dezentralen System, also bei einem System bei dem die Module über eine Busleitung mit der Zentraleinheit verbunden sind, vorteilhaft, jedem Modul eine erste Adresse zum Austausch von Daten mit der Zentraleinheit und eine zweite Adresse zum Empfangen der jeweils von der Zentraleinheit übertragenen Steuerinformation zuzuordnen, wobei die zweite Adresse für alle Module des Systems dieselbe ist.

Die Erfindung wird im folgenden beispielsweise anhand der Zeichnung näher erläutert. Es zeigen:
- Fig. 1: ein schematisches Blockschaltbild eines Sicherheitssystems für Kraftfahrzeuge mit zentral angeordneten Endstufen für die Auslösung von insassenschützenden Einrichtungen,
- Fig. 2: ein schematisches Blockschaltbild der Zentraleinheit und der Endstufen des in Fig. 1 gezeigten Sicherheitssystems,
- Fig. 3: ein vereinfachtes schematisches Blockschaltbild einer Endstufe des in Fig. 1 gezeigten Sicherheitssystems,
- Fig. 4: ein schematisches Blockschaltbild eines Sicherheitssystems für Kraftfahrzeuge mit dezentral angeordneten, jeweils eine Endstufe umfassenden Modulen, die gruppenweise über einen seriellen Bus mit der Zentraleinheit verbunden sind,
- Fig. 5: ein schematisches Blockschaltbild eines Moduls bzw. einer Endstufe des in Fig. 4 gezeigten Sicherheitssystems.

In den verschiedenen Figuren der Zeichnung sind einander entsprechende Bauteile und Schaltungselemente mit gleichen Bezugszeichen versehen.

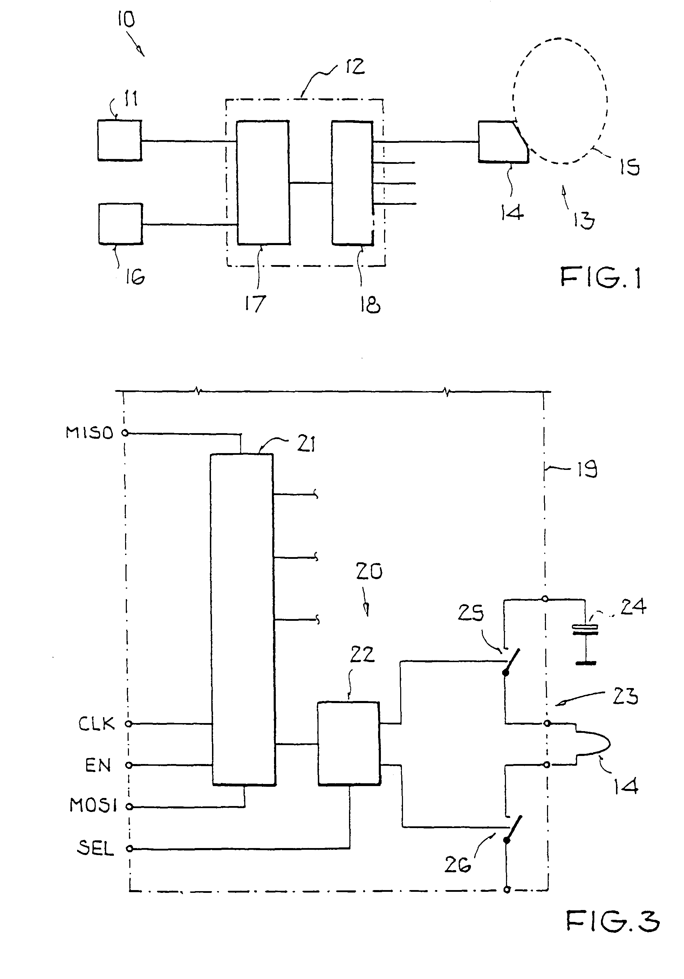

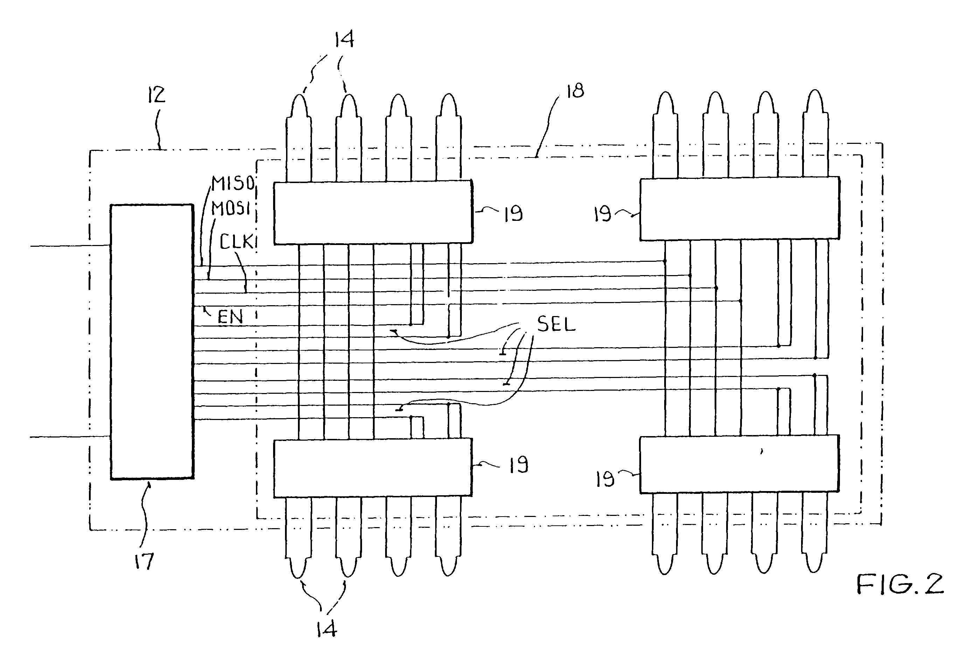

Wie Fig. 1 zeigt, umfaßt ein Sicherheitssystem für ein Fahrzeug zur Personenbeförderung eine Aufprallerkennungseinrichtung 10 mit einer einen oder mehrere Beschleunigungsaufnehmer aufweisende Beschleunigungsaufnehmeranordnung 11 und einem damit verbundenen Auslösegerät 12. An das Auslösegerät 12 sind mehrere Schutzeinrichtungen 13, von denen nur eine dargestellt ist, angeschlossen. Jede Schutzeinrichtung 13 weist eine Auslöseeinrichtung 14 auf, die im Falle eines gefährlichen Aufpralls bei Bedarf ein insassenschützendes Mittel 15, wie einen Front- oder Seitenairbag, einen Gurtsstraffer oder dergleichen sowie ggf. einen Überrollbügel auslöst.

Um bei einem Unfall nur die insassenschützenden Mittel 15 auszulösen, die einem von einer Person belegten Fahrzeugsitz zugeordnet sind, ist eine Sitzbelegungserkennungseinrichtung 16 vorgesehen, die die Belegung der Fahrzeugsitze während des Betriebs des Fahrzeugs ständig überwacht und die ein Freigabesignal an das Auslösegerät 12 liefert, wenn der Fahrzeugsitz belegt ist und die darauf befindliche Person eine Sitzhaltung einnimmt, in der die Auslösung der dem jeweiligen Sitz zugeordneten insassenschützenden Mittel nicht zu Verletzungen führen kann.

Im Auslösegerät 12 ist als Zentraleinheit eine Auswerteschaltung 17 vorgesehen, die beispielsweise einen Mikroprozessor umfaßt und die eine Endstufenanordnung 18 ansteuert. Wie in Fig. 2 dargestellt, weist die Endstufenanordnung 18 beispielsweise vier Endstufenschaltungen 19 mit jeweils vier Endstufen 20 (siehe Fig. 3) auf, die die mit der Zentraleinheit verbundenen Module darstellen. Die Endstufenschaltungen 19 sind dabei beispielsweise als anwendungsspezifische integrierte Schaltungen (ASIC) ausgebildet, die zusammen mit der Auswerteschaltung 17 zentral auf einer nicht dargestellten Leiterplatte angeordnet sind. An jede der Endstufen 20 ist eine der Auslöseeinrichtungen 14 angeschlossen, die schematisch als sogenannte Zündpille eines Gasgenerators dargestellt ist.

Wie in Fig. 3 gezeigt, umfaßt jede der Endstufenschaltungen 19 neben den vier Endstufen 20, von denen nur eine dargestellt ist, eine Schnittstelle 21, die den Informationsaustausch zwischen der Auswerteschaltung 17 und den Enstufen 20 ermöglicht. Für den Informationsaustausch, also für die Programmierung und Überprüfung der Endstufen 20 sowie für die Übertragung einer Auslöseinformation, ist die Schnittstelle 21, die beispielsweise ein Schieberegister zur Übernahme und Weiterleitung von Information aufweist, über einen seriellen Dateneingang MOSI, einen seriellen Datenausgang MISO, einen Takteingang CLK und einen Enable-Eingang EN mit der Auswerteschaltung 17 verbunden.

Jede der Endstufen 20 weist einen Steuerkreis 22 mit einer programmierbaren Speichereinrichtung auf, der eingangsseitig mit der Schnittstelle 21 sowie über eine Auswahlleitung SEL mit der Auswerteschaltung verbunden ist und der zur Betätigung des insassenschützenden Mittels 13 einen Zündkreis 23 beaufschlagt. Der Zündkreis 23 umfaßt eine Reihenschaltung aus einem Autarkiekondensator 24, einem ersten Schalter 25, der Auslöseeinrichtung 14, und einem zweiten Schalter 26.

Beim Betrieb des beschriebenen Sicherheitssystem in einem Fahrzeug überwacht die Auswerteschaltung 17 ständig die von der Beschleunigungsaufnehmeranordnung 11 gelieferte Information über die momentan auf das Fahrzeug wirkende Beschleunigung, um einen gefährlichen Aufprall und ggf. ein Überschlagen des Fahrzeugs zu erkennen und um daraufhin in Abhängigkeit von dem oder den von der Sitzbelegungserkennungseinrichtung 16 zugeführten Freigabesignal bzw. -signalen die zum Schutz der Fahrzeuginsassen vorgesehenen Schutzeinrichtungen zu betätigen.

Daneben wird ständig die Funktionfähigkeit der einzelnen Endstufen überwacht. Hierzu werden die Endstufen 20 einzeln von der als Zentraleinheit dienenden Auswerteschaltung 17 an gesprochen, in dem eine Überprüfungsinformation in die Schnittstelle 21 geschrieben wird. Die jeweils angesprochene Endstufe 20 wird dabei mittels eines über die entsprechende Auswahlleitung SEL zugeführten Auswahlsignals adressiert.

Wird im Falle eines gefährlichen Aufpralls eine Betätigung von Schutzeinrichtungen 13 erforderlich, so sind je nach Art des Aufpralls unterschiedliche Schutzeinrichtungen 13 zu aktivieren.

Beispielsweise reicht es bei einem mittelschweren Frontaufprall aus, nur die Gurtstraffer der belegten Sitze zu aktivieren. Bei einem schweren Frontaufprall sind neben den Gurtstraffern auch die Frontairbags auszulösen. Bei einem Seitenaufprall werden zweckmäßigerweise die Gurtstraffer und die entsprechenden Seitenairbags ausgelöst. Bei einem gefährlichen seitlichen Frontaufprall sind neben den Gurtstraffern und Frontairbags auch die entsprechenden Seitenairbags zu betätigen. Bei einem Heckaufprall ist es zweckmäßig die Gurtstraffer zu betätigen, um die Fahrzeuginsassen fest in den Sitzen zu halten, so daß sie bei einem häufig nachfolgenden Frontaufprall bereits sicher im Sitz festgehalten werden. Erfolgt ein Heckaufprall seitlich, so ist wiederum der Einsatz der entsprechenden Seitenairbags zusätzlich zu den Gurtstraffern erforderlich.

Entsprechend den beispielsweise beschriebenen Unfallklassen wird in der Speichereinrichtung im Steuerkreis 22 jeder Endstufe 20 eine der zugeordneten Schutzeinrichtung 13 entsprechende Aktivierungsinformation gespeichert.

Die Aktivierungsinformation kann dabei im einfachsten Fall ein einzelner Schwellenwert sein. Dies reicht beispielsweise aus, wenn das Fahrzeug nur mit Frontairbags und Gurtstraffern ausgerüstet ist. Auch wenn dabei Frontairbags mit zweistufigen Gasgeneratoren verwendet werden, um Temperatureinflüsse auf die Aufblasgeschwindigkeit des Airbags ausgleichen zu können und/oder um die Aufblasgröße entsprechend der Personengröße zu verändern, reicht dabei ein einzelner Schwellenwert aus.

Beispielsweise wird den Gurtstraffern ein Schwellenwert "1" und den Airbags ein Schwellenwert "2" zugewiesen. Diese Schwellenwerte werden jeweils in den Speichereinrichtungen der entsprechenden Endstufen 20 gespeichert. Diese Speicherung der Schwellenwerte kann z. B. während der ersten Überprüfung der Endstufen 20 nach der jeweiligen Inbetriebnahme des Fahrzeugs erfolgen. Dabei wird für die Programmierung jeder Endstufe 20 ein Schreibvorgang durchgeführt, bei dem jede Endstufe 20 mit Hilfe einer entsprechenden Auswahl über die Auswahlleitung SEL individuell angesprochen wird. Für einen derartigen Schreibvorgang wird beispielsweise 1 ms benötigt. Weist das Sicherheitssystem, wie in Fig. 2 angedeutet, 16 Endstufen 20 auf, so reichen für die Programmierung 16 ms. Die Programmierungszeit ist also verglichen mit der für die zyklischen Überprüfungen vorgesehenen Zeit von 500 ms sehr kurz.

Wird während des normalen Fahrzeugbetriebs von der Sitzbelegungserkennungseinrichtung 16 festgestellt, daß ein Fahrzeugsitz, z. B. der Beifahrersitz nicht belegt ist, so wird in den Endstufen 20 der dem Beifahrersitz zugeordneten Schutzeinrichtungen 13 ein Schwellenwert gespeichert, der größer ist als der der schwersten Unfallklasse zugeordnete Schwellenwert, um eine unnötige Auslösung der in diesem Fall nicht benötigten Schutzeinrichtungen 13 zu verhindern. Im dargestellten Beispiel wäre dieser Schwellenwert "3" oder größer. Sind die Frontairbags hier z. B. als zweistufige Airbags ausgelegt, um die Größe einer auf dem Fahrzeugsitz befindlichen Person zu berücksichtigen oder um einen Temperatureinfluß auf die Aufblasgeschwindigkeit des Airbags ausgleichen zu können, so wird in Abhängigkeit von der von der Sitzbelegungserkennungseinrichtung 16 gelieferten Personengröße oder von einem erfaßten Temperaturwert der Schwellenwert in den jedem zweistufigen Airbag zugeordneten Endstufen 20 ein entsprechender Schwellenwert "2" oder "3" gespeichert, je nach dem welche Stufen des Airbags bei einem gefährlichen Aufprall zu aktivieren sind.

Da die Speicherung der Schwellenwerte, also die Programmierung der Endstufen 20 im Vergleich mit der Dauer der zyklischen Überprüfung der Endstufen 20 sehr schnell erfolgt, können die Schwellenwerte entsprechend der ständig von der Sitzbelegungserkennungseinrichtung 16 gelieferten Information fortlaufend aktualisiert werden.

Um nun im Falle eines gefährlichen Aufpralls alle zu betätigenden Schutzeinrichtungen sehr schnell zu aktivieren, überträgt die Zentraleinheit bzw. die Auswerteschaltung 17 den der ermittelten Unfallklasse entsprechenden Schwellenwert, "1" oder "2", als Steuerinformation an die den Endstufen 20 zugeordneten Schnittstellen 21 und zwar unabhängig davon, welche der einzelnen Endstufen 20 zur Betätigung der Schutzeinrichtungen 13 zu aktivieren sind. Gleichzeitig werden auch alle Endstufen 20 ausgewählt oder adressiert, so daß jeder Endstufe 20 im Falle eines Unfalls die Steuerinformation zur Verfügung steht.

Ist es bei einem mittelschweren Aufprall nur erforderlich die Gurtstraffer zu betätigen, so wird die Steuerinformation "1" an die Endstufen 20 übertragen bzw. in die Schnittstellen 21 eingeschrieben. Während daraufhin die Gurtstraffer ausgelöst werden, werden die Airbags nicht betätigt, da deren Schwellenwert größer ist als die Auslöse- bzw. Steuerinformation.

Bei einem schweren Aufprall wird eine Steuerinformation "2" an die Schnittstellen 21 übertragen, so daß allen Endstufen 20 die Steuerinformation zur Verfügung steht und die Endstufen 20 zum Betätigen der zugeordneten Schutzeinrichtungen 13 aktiviert werden, deren Schwelleninformation kleiner oder gleich der Steuerinformation ist. Erfindungsgemäß werden also nur diejenigen der angesprochenen Endstufen aktiviert, deren Aktivierungsinformation oder Schwellenwert zu der übertragenen Auslöse- oder Steuerinformation in einer vorgegebenen Beziehung steht.

Anstelle des einzelnen Schwellenwerts kann bei dem erfindungsgemäßen Verfahren auch eine Kombination von zwei oder mehr Schwellenwerten vorgesehen sein, wenn das Sicherheitssystem neben den beschrieben Schutzeinrichtungen 13 noch weitere Schutzeinrichtungen 13 aufweist, für die neben der Schwere des Aufpralls auch dessen Richtung für eine Auslöseentscheidung wichtig ist, wie bei Seitenairbags.

Hierbei kann beispielsweise ein erster Schwellenwert wie oben beschrieben für die Betätigung der Frontairbags und der Gurtstraffer verwendet werden, während ein zweiter Schwellenwert die Richtungsinformation liefert. Der zweite Schwellenwert zeigt also an, ob die rechten oder die linken Seitenairbags zu betätigen sind. Die beiden, den unterschiedlichen Schwellenwerten entsprechenden Steuerinformationen können dabei entweder gleichzeitig oder auch nacheinander jeweils in alle Schnittstellen 21 eingeschrieben werden, so daß die erforderlichen Schutzeinrichtungen 13 nach einem oder zwei Schreibvorgängen, bei denen jeweils die Steuerinformation in alle Schnittstellen 21 eingeschrieben wird und somit allen Endstufen zur Verfügung steht, aktiviert werden.

Sobald die nötige Steuerinformation an die einzelnen Endstufen 20 übertragen ist, werden diese also unmittelbar aktiviert, wenn die Steuerinformation in einer vorgegebenen Weise mit dem oder den Schwellenwerten übereinstimmt, wenn also die in den Endstufen 20 gespeicherte Aktivierungsinformation mit der übertragenen Steuerinformation eine vorbestimmte Beziehung erfüllt.

Bei dem erfindungsgemäßen Verfahren wird im Falle eines gefährlichen Aufpralls von der Auswerteschaltung 17 also eine dem Unfall entsprechende Steuerinformation an alle Endstufen 20 bzw. an alle Schnittstellen 21 der Endstufenschaltungen 19 gleichzeitig übertragen, um die einzelnen Schutzeinrichtungen 13 zu aktivieren, während die Entscheidung, ob die'jeweilige Endstufe 20 im vorliegenden Unfall zu aktivieren ist, in den Endstufen 20 selbst erfolgt. In der Auswerteschaltung 17 braucht also nicht mehr berechnet zu werden, welche der Endstufen 20 aktiviert werden müssen, so daß der Auswerteschaltung 17 mehr Zeit für andere Aufgaben, z. B. zum Aufzeichnen eines Unfallprotokolls, zur Verfügung steht.

Für die Auslöse-Entscheidung in den einzelnen Endstufen 20 kann beispielsweise ein entsprechendes logisches Gatter vorgesehen sein, das mittels einem Speicherglied einstellbar oder programmierbar ist. Denkbar ist beispielsweise eine Kombination aus UND-Gattern und einem Flip-Flop, dessen Ausgang eines der UND-Gatter sperrt, falls der zugeordnete Fahrzeugsitz nicht belegt ist und die entsprechenden Schutzeinrichtungen nicht betätigt zu werden brauchen oder nicht betätigt werden dürfen.

Bei dem beschriebenen zentralen System läßt sich der Auslöseverzug gegen über herkömmlichen Auslöse- oder Steuerverfahren deutlich verringern, da die einzelnen Endstufen 20 nicht mehr einzeln sondern gemeinsam angesprochen werden. Damit läßt sich auch der Auslösezeitpunkt für die Schutzeinrichtungen während des Aufpralls optimieren.

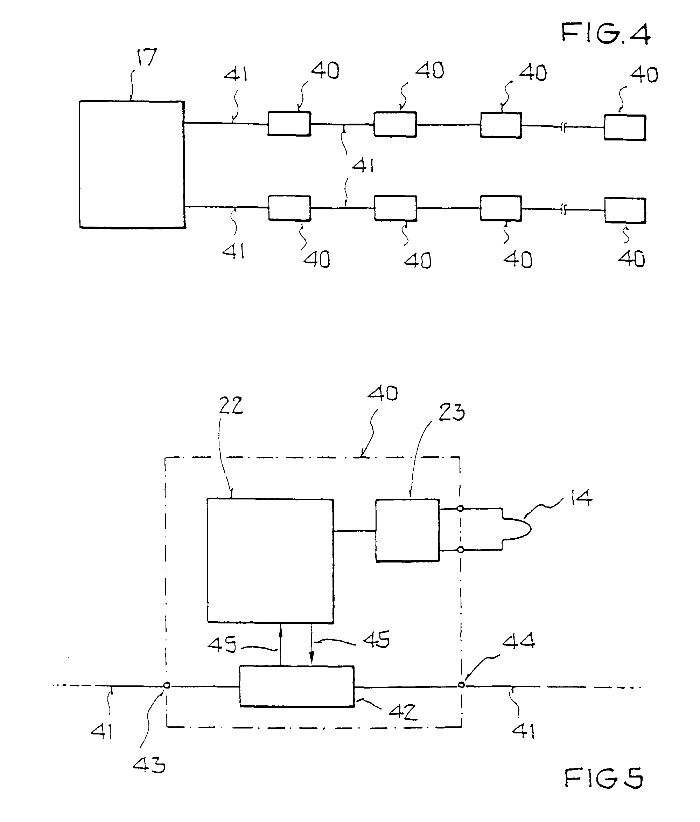

Fig. 4 zeigt ein dezentrales System, bei dem eine Vielzahl von Endstufenmodulen 40 als periphere Module angeordnet sind, die über serielle Busleitungen 41 mit einer als Zentraleinheit dienenden Auswerte- und Steuerschaltung 17 verbunden sind. Dieses mit dem erfindungsgemäßen Verfahren steuerbare System kann bei entsprechender Auslegung zusammen mit einer Aufprallerkennungseinrichtung, einer Sitzbelegungserkennungseinrichtung und insassenschützenden Mitteln ebenfalls ein Sicherheitssystem bilden, es kann aber auch ebenso wie das oben beschriebene System für andere Zwecke eingesetzt werden, bei denen es erforderlich ist, eine Vielzahl von Vorrichtungen einzeln, gruppenweise oder gemeinsam sehr schnell anzusteuern.

Die einzelnen Endstufenmodule 40 des in Fig. 4 gezeigten Systems besitzen, wie in Fig. 5 gezeigt, jeweils eine Sende/Empfangs-Einrichtung 42, die zwischen den ersten und den zweiten Eingangs/Ausgangs-Anschluß 43 bzw. 44 geschaltet ist. Ein Steuerkreis 22 des Endstufenmoduls 40 ist über Leitungen 45 mit der Sende/Empfangs-Einrichtung 42 verbunden, so daß ihm von der Sende/Empfangs-Einrichtung 42 empfangene Informationen zugeführt werden können und er umgekehrt zu sendende Informationen der Sende- und Empfangseinrichtung 42 zuführen kann. Der Steuerkreis 22 ist mit einem Ausgangsschaltkreis verbunden, der bei einem Sicherheitssystem ein Zündkreis 23 für ein insassenschützendes Mittel 15 ist.

Die Sende/Empfangs-Einrichtung 42 übergibt an einem Eingang/Ausgangs-Anschluß 43 bzw. 44 empfangene Informationen an den Steuerkreis 22 und leitet die Information gleichzeitig über den anderen Eingangs/Ausgangs-Anschluß 44 bzw. 43 weiter. Dabei werden die weiterzuleitenden Daten jeweils verstärkt, so daß die Treiberleistung der Zentraleinheit, also der Auswerteschaltung 17 auch bei einer Vielzahl von anzusteuernden Endstufen gering gehalten werden kann. Es ist jedoch auch möglich bei einer genügend hohen Treiberleistung der Auswerteschaltung 17 die Busleitung einfach durch die Endstufenmodule 40 durchzuschleifen.

Bei dem dezentralen Sicherheitssystem erfolgt die Programmierung der Schwellenwerte für die einzelnen Endstufenmodule 40 ebenfalls während der zyklischen Überprüfung. Um die Endstufen individuell ansprechen zu können, ist jedem Endstufemodul 40 eine erste, individuelle Adresse zum Austausch von Daten mit der Zentraleinheit, also mit der Auswerteschaltung 17, zugeordnet. Daneben weist jedes Endstufenmodul 40 eine zweite Adresse zum Empfangen der jeweils von der Auswerteschaltung 17 übertragenen Steuerinformation auf, die vorzugsweise für alle peripheren Endstufenmodule 40 des Systems dieselbe ist.

Während die Programmierung der Schwellenwerte der einzelnen Endstufenmodule 40 in Abhängigkeit von der von der Sitzbelegungserkennungseinrichtung 16 gelieferten Information individuell unter Verwendung der ersten Adressen erfolgt, wird für die Auslösung oder Aktivierung der einzelnen Schutzeinrichtungen 13 die zweite, allen Endstufenmodulen 40 gemeinsame Adresse verwendet. Bei der Übertragung von Steuerinformation werden also alle Endstufen 40 gleichzeitig angesprochen und übernehmen die Steuerinformation, die Aktivierung erfolgt jedoch erst aufgrund der Auswertung der Steuerinformation in den Endstufenmodulen 40.

Auch bei dem dezentralen System läßt sich also das erfindungsgemäße Steuerverfahren vorteilhaft einsetzen, um den Auslöseverzug möglichst gering zu halten, bzw. um den Auslösezeitpunkt der Schutzeinrichtungen zu optimieren. Dabei werden alle Endstufenmodule 40 je nach den verwendeten Schwellenwerten mit einem oder zwei Schreibvorgängen der Auswerteschaltung 17 gemeinsam angesprochen. Die Entscheidung, ob das jeweilige Endstufenmodul 40 aktiviert wird oder nicht, wird also wiederum im Endstufenmodul 40 selbst getroffen, so daß die Auswerteschaltung 17 nur die Unfallklasse festzustellen braucht und nicht berechnen muß, welche Schutzeinrichtungen 13 zu betätigen sind.

## Patentansprüche

1. Steuerverfahren zur Auslösung von adressierbaren Modulen (20; 40) eines Sicherheitssystems in Kraftfahrzeugen, die mit einer Zentraleinheit (17) verbunden sind,
- bei dem alle Module gemeinsam angesprochen werden können und die Zentraleinheit (17) eine Steuerinformation, die aus einem aus wenigstens einer Meßgröße abgeleiteten Istwert besteht, an alle Module gemeinsam überträgt,
- bei dem in jedem Modul (20; 40) eine Aktivierungsinformation aus wenigstens einem Schwellenwert gespeichert wird,
- bei dem nur diejenigen Module (20; 40) ausgelöst werden, deren Aktivierungsinformation zu der übertragenen Steuerinformation in einer vorgegebenen Beziehung steht.

2. Steuerverfahren nach Anspruch 1, **dadurch gekennzeichnet, daß** die in den Modulen (20; 40) gespeicherte Aktivierungsinformation während des Steuerverfahrens von der Zentraleinheit aus veränderbar ist.

3. Steuerverfahren nach Anspruch 2, **dadurch gekennzeichnet, daß** die einzelnen Module (20; 40) von der Zentraleinheit (17) zyklisch überprüft werden und daß die in den Modulen (20; 40) gespeicherte Aktivierungsinformation während der zyklischen Überprüfungen eingestellt oder aktualisiert wird.

4. Steuerverfahren nach einem der vorangehenden Ansprüche, **dadurch gekennzeichnet, daß**
a) als Steuerinformation eine Kombination von zwei oder mehr aus mehreren Meßgrößen abgeleiteten istwerten verwendet wird und
b) als Aktivierungsinformation eine Kombination von zwei oder mehr Schwellwerten vorgesehen ist, mittels der die einzelnen Istwerte jeweils verglichen werden und
c) nur diejenigen der angesprochenen Module (20; 40) ausgelöst werden, deren Aktivierungsinformation zu der übertragenen Steuerinformation in einer vorgegebenen Beziehung steht.

5. Steuerverfahren nach einem der vorangehenden Ansprüche, **dadurch gekennzeichnet, daß** jedem Modul (20; 40) eine individuelle Adresse zum Austausch von Daten mit der Zentraleinheit (17) und eine für alle Module gleiche Sammeladresse zum gemeinsamen Empfangen der jeweils von der Zentraleinheit (17) übertragenen Steuerinformation in allen Modulen zugeordnet ist.

6. Steuerverfahren nach Anspruch 1, **dadurch gekennzeichnet, daß** die Steuerinformation aus einem aus wenigstens einer sicherheitsrelevanten Meßgröße abgeleiteten Istwert und die Aktivierungsinformation aus wenigstens einem, einen bestimmten Sicherheitszustand beschreibenden Schwellenwert besteht.

7. Steuerverfahren nach Anspruch 6, **dadurch gekennzeichnet, daß** mit der Zentraleinheit eine Sitzbelegungserkennung verbunden ist und die Zentraleinheit in Abhängigkeit von der erkannten Sitzbelegung die Aktivierungsinformation durch Änderung des Schwellwerts anpaßt.

8. Steuerverfahren nach Anspruch 7, **dadurch gekennzeichnet, daß** ein Schwellwert vorgesehen ist, der so gewählt, insbesondere so groß, ist, daß die Steuerinformation diesen Schwellwert nie annehmen wird und dieser Schwellwert genau den Modulen zugewiesen wird, die aufgrund der Sitzbelegung nicht ausgelöst werden sollen.

9. Steuerverfahren nach einem der vorangehenden Ansprüche, **dadurch gekennzeichnet, daß** als eine der sicherheitsrelevanten Meßgrößen die Beschleunigung mittels eines Beschleunigungssensors erfaßt wird.

10. Steuerverfahren nach einem der vorangehenden Ansprüche, **dadurch gekennzeichnet, daß** die Module Endstufen von Insassenschutzeinrichtungen sind und beim Übereinstimmen von Steuer- und Aktivierungsinformation diese Insassenschutzeinrichtungen ausgelöst werden.

## Claims

1. A control method for triggering addressable modules (20; 40) of a safety system for motor vehicles, in which said modules are connected to a central unit (17),
- wherein all of the modules can be addressed in common and the central unit (17) transmits an item of control information to all said modules in common, said item of information consisting of a present-state value derived from at least one measured variable,
- wherein an item of activating information comprising at least one threshold value is stored in each module (20; 40),
- wherein only those modules (20; 40) are triggered in which the item of activating information has a predefined relationship with the transmitted item of control information.

2. A control method in accordance with Claim 1, characterised in that the item of activating information stored in the modules (20; 40) is capable of being altered by the central unit during the control process.

3. A control method in accordance with Claim 2, characterised in that the individual modules (20; 40) are cyclically checked by the central unit (17) and in that the item of activating information stored in the modules (20; 40) is set or up-dated during the cyclical checking processes.

4. A control method in accordance with any of the preceding Claims, characterised in that
a) a combination of two or more present-state values derived from a plurality of measured variables is used as the item of control information and that
b) the item of activating information is provided in the form of a combination of two or more threshold values by means of which the individual present-state values are compared and that
c) only those ones of the accessed modules (20; 40) are triggered in which the item of activating information has a predefined relationship with the transmitted item of control information.

5. A control method in accordance with any of the preceding Claims, characterised in that an individual address for exchanging data with the central unit (17) is associated with each module (20; 40) and a collective address, which is the same for all of the modules, is associated therewith so that the items of control information being transmitted on each occasion by the central unit (17) can be collectively received in all of the modules.

6. A control method in accordance with Claim 1, characterised in that the item of control information consists of a current-state value derived from at least one measured variable which is relevant to safety, and the item of activating information consists of at least one threshold value defining a certain state of safety.

7. A control method in accordance with Claim 6, characterised in that a means for identifying whether a seat is occupied is connected to the central unit, and in that the central unit adjusts the item of activating information by altering the threshold value in dependence on the result of the seat-occupancy detecting process.

8. A control method in accordance with Claim 7, characterised in that there is provided a threshold value which is selected, in particular the magnitude thereof is selected, such that the item of control information could never adopt this threshold value, and this threshold value is allocated to those particular modules which should not be triggered for reason of the seat-occupancy process.

9. A control method in accordance with any of the preceding Claims, characterised in that, as being one of the measured variables which is relevant to safety, the acceleration is determined by means of an acceleration sensor.

10. A control method in accordance with any of the preceding Claims, characterised in that the modules are output stages of occupant-protection devices, and in that these occupant-protection devices are triggered when the item of control information and the item of activating information are in agreement.

## Revendications

1. Procédé de commande pour le déclenchement de modules adressables (20;40) d'un système de sécurité dans des véhicules automobiles, qui sont reliés à une unité centrale (17),
selon lequel tous les modules peuvent être interrogés en commun et l'unité centrale (17) transmet en commun à tous les modules une information de commande qui est constituée par une valeur réelle dérivée d'au moins une grandeur de commande,
selon lequel dans chaque module (20;40), une information d'activation est mémorisée à partir d'au moins une valeur de seuil, et
selon lequel seuls sont déclenchés les modules (20;40), dont l'information d'activation est associée selon une relation prédéterminée à l'information de commande transmise.

2. Procédé de commande selon la revendication 1, caractérisé en ce que l'information d'activation mémorisée dans les modules (20;40) peut être modifiée à partir de l'unité centrale pendant le procédé de commande.

3. Procédé de commande selon la revendication 2, caractérisé en ce que les différents modules (20;40) sont contrôlés cycliquement par l'unité centrale (17) et que l'information d'activation mémorisée dans les modules (20;40) est réglée ou actualisée pendant les contrôles cycliques.

4. Procédé de commande selon l'une des revendications précédentes, caractérisé en ce que
a) on utilise comme information de commande une combinaison de deux ou d'un plus grand nombre de valeurs réelles dérivées de plusieurs grandeurs de mesure, et
b) comme information d'activation il est prévu une combinaison de deux ou d'un plus grand nombre de valeurs de seuil, à l'aide de laquelle les différentes valeurs réelles sont respectivement comparées, et
c) seuls sont déclenchés les modules appelés (20;40), dont l'information d'activation est associée, selon une relation prédéterminée, à l'information de commande transmise.

5. Procédé de commande selon l'une des revendications précédentes, caractérisé en ce qu'à chaque module (20;40) sont associées une adresse individuelle pour l'échange de données avec l'unité centrale (17) et une adresse de collecte, identique pour tous les modules, pour la réception commune de l'information de commande transmise respectivement par l'unité centrale (17), dans tous les modules.

6. Procédé de commande selon la revendication 1, caractérisé en ce que l'information de commande est constituée par une valeur réelle dérivée d'au moins une grandeur de mesure importante du point de vue sécurité, et que l'information d'activation est constituée par au moins une valeur de seuil qui décrit un état de sécurité déterminé.

7. Procédé de commande selon la revendication 6, caractérisé en ce qu'une unité d'identification d'occupation des sièges est reliée à l'unité centrale et que l'unité centrale adapte l'information d'activation, par modification de la valeur de seuil, en fonction de l'occupation identifiée de sièges.

8. Procédé de commande selon la revendication 7, caractérisé en ce qu'il est prévu une valeur de seuil, qui est sélectionnée et notamment est suffisamment élevée pour que l'information de commande ne prenne jamais cette valeur de seuil, et que cette valeur de seuil est affectée de façon précise aux modules qui ne doivent pas être déclenchés sur la base de l'occupation des sièges.

9. Procédé de commande selon l'une des revendications précédentes, caractérisé en ce que l'accélération est détectée, en tant que l'une des grandeurs de mesure importantes du point de vue sécurité, au moyen d'un détecteur d'accélération.

10. Procédé de commande selon l'une des revendications précédentes, caractérisé en ce que les modules sont les étages finals de dispositifs de protection pour les passagers et que, en cas de coïncidence entre l'information de commande et l'information d'activation, ces dispositifs de protection pour les passagers sont déclenchés.
